(19) Europäisches Patentamt
European Patent Office
Office européen des brevets

(11) Publication number : 0 461 774 B1

# (12) EUROPEAN PATENT SPECIFICATION

(45) Date of publication of patent specification : 29.12.93 Bulletin 93/52

(51) Int. Cl.$^5$ : C10M 149/04, C10M 143/02, C08F 255/00

(21) Application number : 91304671.0

(22) Date of filing : 23.05.91

## (54) Dispersant, antioxidant and VI improver and lubricating oil composition containing same.

(30) Priority : 12.06.90 US 536846

(43) Date of publication of application : 18.12.91 Bulletin 91/51

(45) Publication of the grant of the patent : 29.12.93 Bulletin 93/52

(84) Designated Contracting States : DE GB

(56) References cited :
EP-A- 0 206 455
EP-A- 0 284 234
US-A- 4 863 623

(73) Proprietor : TEXACO DEVELOPMENT CORPORATION
2000 Westchester Avenue
White Plains, New York 10650 (US)

(72) Inventor : Kapuscinski, Maria Magdelena
72 Rambler Road
RD3 Carmel, N.Y. 10512 (US)
Inventor : Nalesnik, Theodore Eugene
19B Willwood Manor
Wappingers Falls, N.Y. 12590 (US)
Inventor : Biggs, Robert Thomas
RD2-335A Coldenham Road
Walden, N.Y. 12586 (US)

(74) Representative : Green, Mark Charles et al
Urquhart-Dykes & Lord, 91 Wimpole Street
London W1M 8AH (GB)

EP 0 461 774 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a novel multifunctional lubricant additive which is a dispersant, antioxidant and a VI improver additive when employed in a lubricating oil composition.

The art contains many teachings on the use of polymeric additives in lubricating oil compositions. Ethylene-propylene copolymers and ethylene-alpha olefin non-conjugated diene terpolymers which have been further derivatized to provide multiple properties in lubricating oil compositions illustrate this field of lubricating oil additives.

U.S. Patent No. 3,522,180 discloses a method for the preparation of an ethylene-propylene copolymer substrate effective as a viscosity index improver for lubricating oils.

U.S. Patent No. 4,089,794 discloses ethylene copolymers derived from ethylene and one or more $C_3$ to $C_{28}$ alpha olefins solution grafted with an ethylenically-unsaturated carboxylic acid material followed by a reaction with a poly-functional material reactive with carboxyl groups, such as a polyamine, a polyol, or a hydroxyamine, which reaction product is useful as a sludge and varnish control additive in lubricating oils.

U.S. Patent No. 4,137,185 discloses a stabilized imide graft of an ethylene copolymer additive for lubricants.

U.S. Patent No. 4,146,489 discloses a graft copolymer where the backbone polymer is an oil-soluble ethylene-propylene copolymer or an ethylene-propylene-diene modified terpolymer with a graph monomer of C-vinylpyridine or N-vinylpyrrolidone to provide a dispersant VI improver for lubricating oils.

U.S. Patent No. 4,320,019 discloses a multipurpose lubricating additive prepared by the reaction of an interpolymer of ethylene and a $C_3$ to $C_8$ alpha-monoolefin with an olefinic carboxylic acid acylating agent to form an acylating reaction intermediate which is then reacted with an amine.

U.S. Patent No. 4,340,689 discloses a process for grafting a functional organic group onto an ethylene copolymer or an ethylene-propylene-diene terpolymer.

U.S. Patent No. 4,357,250 discloses a reaction product of a copolymer and an olefin carboxylic acid via the "ene" reaction followed by a reaction with a monoamine-polyamine mixture.

U.S. Patent No. 4,382,007 discloses a dispersant - VI improver prepared by reacting a polyamine-derived dispersant with an oxidized ethylene-propylene polymer or an ethylene-propylene diene terpolymer.

U.S. Patent No. 4,144,181 discloses polymer additives for fuels and lubricants comprising a grafted ethylene copolymer reacted with a polyamine, polyol or hydroxyamine and finally reacted with an alkaryl sulfonic acid.

U.S. Patent No. 4,863,623 discloses multifunctional VI improver prepared by derivatizing succinic anhydride molecularly bound to an ethylene-propylene copolymer or an ethylene-propylene-diene terpolymer with N-phenyl-p-phenylenediamine.

EP-A-206455 discloses a lubricating oil composition containing an ethylene-propylene copolymer bearing moieties derived from the reaction product of allyl glycidyl ether and a heterocyclic amine, such as N-(3-aminopropyl)morpholine.

EP-A-284234 discloses multifunctional lubricating oils wherein a carbon-carbon backbone has introduced a first monomer containing ethylenic unsaturation and an epoxide moiety. The pendant moiety can then be functionalized with an agent containing a zerewitnoff-active hydrogen, and typically bears an active group selected from $-NH_2$, -NHR, -OH, -COOH and -SH.

An object of this invention is to provide a novel derivatized copolymer composition.

Another object of this invention is to provide a process for preparing a derivatized dispersant olefin copolymer using an unsaturated epoxide monomer and N-arylphenylenediamine.

Still another object of the invention is to provide a multifunctional lubricant additive effective for imparting viscosity index, dispersancy and antioxidant properties to a lubricating oil composition.

A further object is to provide a novel lubricating oil composition containing the copolymer additive of the invention, as well as to provide concentrates of the novel additive of invention.

The novel reaction product of the invention comprises an ethylene copolymer or terpolymer of a $C_3$ to $C_{10}$ alpha-monomer olefin and, optionally, a non-conjugated diene or triene on which has been grafted a monomer formed from an unsaturated epoxide and an N-arylphenylenediamine such as N-phenyl-p-phenylenediamine.

The novel lubricating oil composition of the invention comprises an oil of lubricating viscosity and an effective amount of the novel reaction product. The lubricating oil will be characterized by having viscosity index improver, dispersant, and antioxidant properties.

Concentrates of the reaction product of the invention are also contemplated.

The polymer or copolymer substrate employed in the novel additive of the invention may be prepared from ethylene and propylene or it may be prepared from ethylene and a higher olefin within the range of $C_3$ to $C_{10}$ alpha-monoolefins.

More complex polymer substrates often designated as interpolymers may be prepared using a third component. The third component generally used to prepare an interpolymer substrate is a polyene monomer selected from non-conjugated dienes and trienes. The non-conjugated diene component is one having from 5 to 14 carbon atoms in the chain. Preferably, the diene monomer is characterized by the presence of a vinyl group in its structure and can include cyclic and bicyclo compounds. Representative dienes include 1,4-hexadiene, 1,4-cyclohexadiene, dicyclopentadiene, 5-ethylidene-2-norbornene, vinylnorbornene, 5-methylene-2-norbornene, 1,5-heptadiene, and 1,6-octadiene. A mixture of more than one diene can be used in the preparation of the interpolymer. A preferred non-conjugated diene for preparing a terpolymer or interpolymer substrate is 5-ethylidene-2-norbornene.

The triene component will have at least two non-conjugated double bonds, and up to about 30 carbon atoms in the chain. typical trienes useful in preparing the interpolymer of the invention are 1-isopropylidene-3a,4,7,7a-tetrahydroindene, 1-isopropylidenedicyclopentadiene,dehydro-isodicyclopentadiene, and 2-(2-methylene-4-methyl-3-pentenyl)[2.2.1] bicyclo-5-heptene.

The polymerization reaction to form the polymer substrate is generally carried out in the presence of a catalyst in a solvent medium. The polymerization solvent may be any suitable inert organic solvent that is liquid under reaction conditions for solution polymerization of monoolefins which is generally conducted in the presence of a Ziegler type catalyst. Examples of satisfactory hydrocarbon solvents include straight chain paraffins having from 5 to 8 carbon atoms, with hexane being preferred. Aromatic hydrocarbons, preferably aromatic hydrocarbon having a single benzene nucleus, such as benzene, toluene, and the like; and saturated cyclic hydrocarbons having boiling point ranges approximating those of the straight chain paraffinic hydrocarbons and aromatic hydrocarbons described above, are particularly suitable. The solvent selected may be a mixture of one or more of the foregoing hydrocarbons. It is desirable that the solvent be free of substances that will interfere with a Ziegler polymerization reaction.

In a typical preparation of a polymer substrate, hexane is first introduced into a reactor and the temperature in the reactor is raised moderately to about 30°C. Dry propylene is fed to the reactor until the pressure reaches about 40-45 inches of mercury (7.6-8.5 Pa). The pressure is then increased to about 60 inches of mercury (11.4 Pa) and dry ethylene and 5-ethylidene-2-norbornene are fed to the reactor. The monomer feeds are stopped and a mixture of aluminum sesquichloride and vanadium oxytrichloride are added to initiate the polymerization reaction. Completion of the polymerization reaction is evidenced by a drop in the pressure in the reactor.

Ethylene-propylene or higher alpha monoolefin copolymers may consist of from 25 to 85 mole percent ethylene and from 15 to 75 mole percent propylene or higher monoolefin with the preferred mole ratios being from 55 to 80 mole percent ethylene and from 20 to 45 mole percent of a $C_3$ to $C_{10}$ alpha monoolefin.

Terpolymer variations of the foregoing polymers may contain from 0.1 to 10 mole percent of a non-conjugated diene or triene.

The polymer substrate, that is, the ethylene copolymer or terpolymer, is an oil-soluble, substantially linear, rubbery material having a number average molecular weight from 5,000 to 500,000, a preferred molecular weight range of 25,000 to 250,000, a more preferred range from 50,000 to 150,000, and a particularly preferred molecular weight from 75,000 to 125,000.

The terms polymer and copolymer are used generically to encompass ethylene copolymers, terpolymers or interpolymers. These materials may contain minor amounts of other olefinic monomers so long as their basic characteristics are not materially changed.

The polymer can be modified in a one-step or two-step process. In the one-step process, a monomer prepared from the reaction of an unsaturated epoxide and N-arylphenylenediamine amine is grafted onto the polymer backbone. In the two-step process, the unsaturated epoxide is first grafted onto the polymer substrate followed by capping with an N-arylphenylenediamine Glycidyl methacrylate is the preferred unsaturated epoxide reactant. Allyl glycidyl ether is another valuable unsaturated epoxide reactant.

N-arylphenylenediamines are represented by the formula:

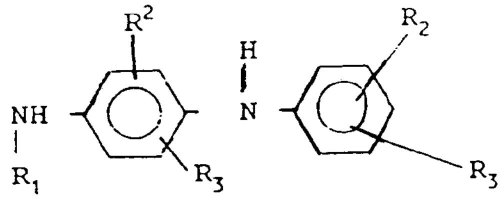

where $R^1$ is hydrogen or an organic linear, cyclic, heterocyclic, aromatic or heteroaromatic group composed of hydrocarbon and/or containing one or more atoms of oxygen, nitrogen, sulfur or phosphorus, and $R_2$ and $R_3$

represent hydrogen or an organic linear, cyclic, heterocyclic or aromatic group composed of hydrocarbon and/or containing one or more atoms of oxygen, nitrogen, sulfur or phosphorus.

Particularly preferred N-arylphenylenediamines are the N-phenylphenylenediamines, for example, N-phenyl-1,4-phenylenediamine, N-phenyl-1,3-phenylenediamine, and N-phenyl-1,2-phenylenediamine.

A typical monomer is obtained by the reaction of glycidyl methacrylate and N-phenylphenylenediamine. This reaction and the resulting product is illustrated by the following formulas:

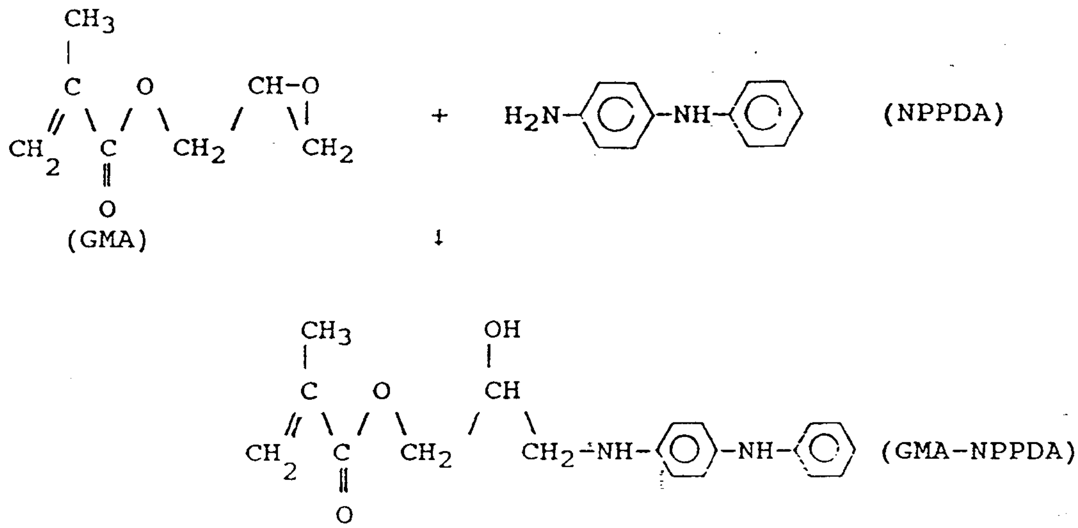

(GMA) (NPPDA) (GMA-NPPDA)

The monomer derived from unsaturated epoxide and N-arylphenylenediamine or unsaturated epoxide (in the two-step process) may be grafted onto the polymer backbone in solution or in solid form preferably using a free radical initiator. The monomer is admitted in the amount of 1-40 weight parts, preferably 4-12 weight parts per 100 weight parts of polymer. The grafting reaction is carried out at an elevated temperature in the range of 100°C to 250°C, preferably 120°C to 190°C and more preferably at 150°C to 180°C, e.g., above 160°C, in a solvent, preferably a mineral lubricating oil solution containing, e.g., 1 to 50, preferably 5 to 40 weight percent, based on the initial total oil solution, of the ethylene-propylene copolymer and preferably under an inert environment.

The free-radical initiators which may be used are peroxides, hydroperoxides, and azo compounds and preferably those which have a boiling point greater than about 100°C and decompose thermally within the prescribed temperature range to provide free radicals. Representative of these free-radical initiators are dicumyl peroxide, 2,2'-azobis(2-methyl-N-[1,1-bis(hydroxymethyl)ethyl]propionamide, di-tert-butylperoxide, azobisisobutyronitrile, diacetylperoxide and diisopropylperoxidicarbonate. The initiator is used in an amount of between about 0.001% and about 30% by weight based on the weight of polymer. The reaction is preferably carried out in an inert atmosphere, such as under nitrogen blanketing.

The polymer substrates used herein are substantially linear, hydrocarbon polymers. Typical are the oil soluble ethylene-propylene based copolymers, saturated and unsaturated containing from about 25 to 85 mole percent ethylene units. This includes ethylene-propylene-copolymer (EPM) or diene terpolymers (EPDM), such as an ethylene propylene-1,4-hexadiene terpolymer or a 5-ethylene-2-norbornene terpolymer. Hydrogenated polyisoproprene or copolymers of isoprene with styrene or butadiene are included.

Polymer substrates or interpolymers are available commercially. Particularly useful are those containing from about 40 to about 80 mole percent ethylene units, about 60 to about 20 mole percent propylene units. Examples are Epsyn 4106 available from Copolymer Rubber and Chemical Corporation which is EPDM containing about 59 mole percent ethylene, 40 mole percent propylene and around 0.5 mole percent of ethylidene norbornene. Other examples are "Ortholeum 2052" and "PL-1256" available from E. I. duPont deNemours and Co. The former is a terpolymer containing about 48 mole percent ethylene units, 48 mole percent propylene units and 4 mole percent 1,4-hexadiene units, having an inherent viscosity of 1.35. The latter is a similar polymer with an inherent viscosity of 1.95. The viscosity average molecular weights of the two are on the order of 200,000 and 280,000, respectively.

When the two-step process is used, the reaction between the polymer substrate intermediate having grafted thereon an epoxy function and the N-arylphenylenediamine is conducted by heating a solution of the polymer substrate under inert conditions and then adding the aromatic hindered amine compound to the heated solution generally with mixing to effect the reaction. The amine is admitted in the amount of 0.3-50 weight parts,

preferably 1-14 weight parts, and more preferably in equimolar amounts to the amount of the epoxide admitted during the first step of the process. It is convenient to employ an oil solution of the polymer substrate heated to 140°C to 175°C while maintaining the solution under a nitrogen blanket. The N-arylphenylenediamine is added to this solution and the reaction is effected under the noted conditions.

Typically, the polymer product may contain about 0.1 to about 20, preferably 1-8 units derived from aromatic amino per 1000 carbon atoms of the charge backbone polymer.

For ease of handling, enough mineral oil, such as SUS 100 oil typified by SNO-100 is then added to obtain a fluid concentrate product at room temperature. The product is typically obtained as a solution of 4 to 20 parts in 80 to 96 parts of oil. When the grafting reaction is carried out in hexane (or other low boiling solvent), a stripping step is included.

The following examples illustrate the preparation of the novel reaction product additive of the invention.

## EXAMPLE I

In this example, a monomer is prepared from glycidyl methacrylate (GMA) and N-phenyl-p-phenylene diamine (NPPDA). 36.8 grams (0.2 mole) of NPPDA, 28.4 grams of glycidyl methacrylate (0.2 mole), 2 grams of tetrahydrofurane (THF) and 4.0 grams of water are heated with stirring at 100°C for two hours to produce the unsaturated epoxide monomer (Monomer GMA-NPPDA).

## EXAMPLE II

The monomer prepared as described in Example I is grafted onto an ethylene-propylene monomer (EPM) containing 59 mole percent ethylene and around 0.3 mole percent of ethylidene norbornene (extruded EPsyn 4106) in the presence of a free radical initiator, dicumyl peroxide. EPM (Mn = 80,000 as measured by SEC) is used.

100 w. parts of EPM dissolved in 400 parts of mineral grafting oil (SUN-130) is heated to 155°C (with stirring under nitrogen). 8.0 w. parts of monomer dissolved in 4.0 w. parts of THF is added, followed by 8.0 wt. parts of dicumyl peroxide (DICUP) dissolved in 15 wt. parts of oil. The mixture is stirred using the above conditions for two hours.

Then, the solvent neutral oil (SNO-100) is added to give a solution containing 13.0 weight percent polymer. This solution is used for further testing.

## EXAMPLE III

100 w. parts of EPM dissolved in 400 parts of mineral grafting oil (SUN-148) is heated to 155°C (with stirring under nitrogen). 6.0 w. parts of GMA diluted with 2.0 w. parts of toluene is added followed by 2.1 wt. parts dicumyl peroxide dissolved in 6.0 wt. parts of oil. The mixture is stirred using the above conditions for two hours.

7.73 wt. parts of NPPDA dissolved in 23 wt. parts of the adduct of nonylphenol and 4 moles of ethylene oxide (Surfonic 40) is charged. The mixture is heated with stirring under nitrogen for two hours.

Then, the solvent neutral oil (SNO-100) is added to give a solution containing 13.0 weight percent polymer. This solution is used for further testing.

## EXAMPLE IV (COMPARISON)

In this example, 12.5 weight percent EPM solution in mineral oil is prepared. 100 wt. parts of EPM used in Example II is added to 400 wt. parts of SUN-130 and 300 wt. parts of SNO-100. The mixture is heated to 155°C with stirring and under nitrogen for three hours until the rubber is completely dissolved.

The novel graft and derivatized polymer of the invention is useful as an additive for lubricating oils. They are multifunctional additives for lubricants being effective to provide dispersancy, viscosity index improvement and anti-oxidant properties to lubricating oils. They can be employed in a variety of oils of lubricating viscosity including natural and synthetic lubricating oils and mixtures thereof. The novel additives can be employed in crankcase lubricating oils for spark-ignited and compression-ignited internal combustion engines. The compositions can also be used in gas engines, or turbines, automatic transmission fluids, gear lubricants, metal-working lubricants, hydraulic fluids and other lubricating oil and grease compositions. Their use in motor fuel compositions is also contemplated.

The base oil may be a natural oil including liquid petroleum oils and solvent-treated or acid-treated mineral lubricating oils of the paraffinic, naphthenic and mixed paraffinic-naphthenic types.

In general, the lubricating oil additive of the invention will contain the novel reaction product in a concentration ranging from about 1 to 30 weight percent. A preferred concentration range for the additive is from about 2 to 15 weight percent based on the total weight of the oil composition.

A lubricating motor oil may contain from about 0.1 to 5.0 weight percent of the additive reaction product in a carrier or diluent oil of lubricating oil viscosity.

The novel reaction product of the invention may be employed in lubricant compositions together with conventional lubricant additives. Such additives may include additional dispersants, detergents, anti-oxidants, pour point depressants, anti-wear agents and the like.

Use of the additive of this invention makes it possible to readily increase the viscosity index by 25-40 units, say 35 units, and to obtain improved ratings on the tests measuring the dispersancy of the system. The viscosity index is determined by ASTM Test D-445.

The novel additive reaction product of the invention was tested for its effectiveness as a antioxidant and as a dispersant in a formulated lubricating oil composition. In all of the examples, the polymer substrate was similar, comprising about 59 mole percent ethylene, 41 mole percent propylene and about 0.5 mole percent ethylidene norbornene having a number average molecular weight of about 80,000.

Antioxidancy is measured by the Bench Oxidation Test (BOT). In this test, 1.5 weight percent of the additive is blended into solvent neutral oil. The blend is heated while air is passed through the mixture. Samples are withdrawn periodically and analyzed by DIR Differential Infrared Analysis to observe changes in the intensity of the carbonyl group vibration at 1710/cm$^{-1}$. A higher intensity indicates lower thermal oxidation stability. The Oxidation Index (OI) is reported as the change in intensity after 144 hours.

Dispersancy is determined by the Bench VC Test (BVCT). In this test, the turbidity of an oil containing an additive is measured after heating the test oil to which has been added a standard blow-by. The result correlates with dispersancy and is compared to three standards tested simultaneously with the test sample. The numerical rating decreases with an increase in dispersant effectiveness. Results above 90 indicate that the additive does not provide dispersant activity.

Grafting yield of grafted monomer is determined by IR-analysis of isolated rubber. Changes in the aromatic band at 1600 cm$^{-1}$ compared to the ungrafted rubber band at 721 cm$^{-1}$ are examined. The rubber is isolated from solution by multiple dissolution/precipitation using cyclohexane as a solvent and acetone as precipitator, then the rubber is dried in vacuum at 60°C for 36 hours.

The product of invention is evaluated in the Sequence VE Engine Test. The Sequence VE test procedure is designed to evaluate the propensity of crankcase motor oils to prevent sludge and varnish deposits and engine wear.

The test results are set forth in Tables 1 and 2 below.

The evaluation data for Examples II, III and IV* are listed in Table 1. As seen in Table 1, Examples II and III containing rubber incorporating epoxy-amine units show good dispersant and antioxidant activity. The reference Example IV* containing unmodified rubber show neither dispersant nor anti-oxidant activity.

The sample of Example 2 showed excellent Sequence V-E Engine Test performance as is shown in Table 2.

Table 1

Properties of VI Improvers

| EXAMPLE | II | III | IV* |
|---|---|---|---|
| MATERIAL wt. parts | | | |
| EPM | 100 | 100 | 100 |
| Monomer GMA-NPPDA (1-step) | 8.0 | - | - |
| GMA ) 2-steps | - | 6.0 | - |
| NPPDA ) 2-steps | - | 7.7 | - |
| DICUP | 8.0 | 2.2 | - |
| Grafting oil | 321.4 | 321.5 | 331.8 |
| Diluent oil | 322.7 | 318.6 | 337.4 |
| IR SPECTRA | | | |
| 1600/721 $cm^{-1}$ (band heights ratio) | .46 | .15 | 0.0 |
| VISCOSITY INDEX | 172 | 166 | 157 |
| OXIDATION INDEX (1) | 0.76 | 1.0 | 24.0 |
| BENCH DISPERSANCY (2) | | | |
| Result | 50.4 | 75.2 | 93 |
| Standards | | 14/23/60 | |

(1) Change in the intensity of the carbonyl group IR vibration at 1710 $cm^{-1}$ after 144 hours in Bench Oxidation Test.

(2) As measured by Bench VC Test.

Table 2

SEQUENCE V-E ENGINE TEST COMPARISONS
5W-30 PROTOTYPE SG FORMULATIONS

| VI IMPROVER | Run 1 | Run 2 | Run 3 | Run 4 | |
|---|---|---|---|---|---|
| Dispersant Inhibitor Package | <-----------A-------------> | | | | |
| Example 2 (DAOCP) | 9.50 | | | | |
| Competing VI Improver A | | 8.00 | | | |
| Competing VI Improver B | | | 9.10 | | |
| Dispersant-Olefin Copolymer VI Improver | | | | 8.00 | |
| SEQUENCE V-E | | | | | SG LIMITS |
| R/A Sludge | 9.63 | 4.1 | 8.9 | 5.8 | 7.0 min. |
| AVG Sludge | 9.60 | 4.2 | 7.1 | 6.4 | 9.0 min. |
| PSV | 7.3 | 7.3 | 7.2 | 7.0 | 6.5 min. |
| AVG Varnish | 6.3 | 6.1 | 6.4 | 5.2 | 5.0 min. |
| Oil Ring Clogging, % | 0 | 23.8 | 0 | 35 | 15.0 max. |
| Oil Screen Clogging, % | 0 | 100 | 90 | 78 | 20.0 max. |
| Oil Screen Clogging, % (other than sludge) | 0 | 3 | 5 | 22 | -- |
| Cam Wear, mils, Max. | 8.6 | 20.0 | 12.3 | 19.2 | 15.0 max. |
| Avg. | 3.7 | 7.7 | 8.9 | 4.8 | 5.0 max. |

Run 1, Example II of the invention, gave an excellent Sequence V-E Engine Test performance and was substantially better than commercial and competitive viscosity index improvers.

The motor oil composition of the invention containing the novel dispersant and antioxidant VI improver exhibited outstanding properties, as evidenced in the foregoing tests.

## Claims

1. A process for the preparation of an oil additive which comprises reacting a polymer prepared from ethylene and at least one $C_3$ to $C_{10}$ alpha-monoolefin and, optionally, a polyene selected from non-conjugated dienes and trienes, said polymer comprising from 25 to 85 mole percent of ethylene, from 15 to 75 mole percent of said $C_3$ to $C_{10}$ alpha-monoolefin, and from O to 15 mole percent of said polyene, and having a number average molecular weight ranging from 5,000 to 500,000 with (a) a monomer derived from an unsaturated epoxide and N-arylphenylenediamine or with (b) a graft monomer containing an ethylenically unsaturated carbon-carbon double bond and an epoxide group under graft polymerization reaction conditions in the presence of free radical initiator to produce a grafted intermediate and reacting said graft intermediate with N-arylphenylenediamine.

2. A process according to Claim 1 in which said polymer and said monomer in reaction (a) are reacted in the presence of a free radical initiator.

3. A process according to Claim 1 or Claim 2 in which said N-arylphenylenediamine is N-phenyl-p-phenylenediamine.

4. A process according to any one of Claims 1 to 3 in which said unsaturated epoxide is glycidyl methacrylate or allyl glycidyl ether or a mixture thereof.

5. A process according to any one of Claims 1 to 4 in which said monomer or unsaturated epoxide is reacted with said polymer in the ratio of 1.0 to 40 parts of monomer per 100 parts of said polymer.

6. A process according to any one of the preceding claims in which in reaction (b) said free radical initiator is dicumyl peroxide.

7. A process according to any one of the preceding Claims in which in reaction (b) said N-arylphenylenediamine is reacted with said polymer containing pendant epoxide groups in the ratio of 0.3 to 50 parts of amine per 100 parts of said polymer.

8. A process according to any one of the preceding Claims wherein the backbone polymer is a copolymer of ethylene-propylene-diene terpolymer or of ethylene propylene.

9. A lubricating oil additive for use as a viscosity index improver, antioxidant and dispersant in motor oils, comprising a major portion of a single-grade lubricating oil and a minor amount of product produced by a process as claimed in any one of the preceding Claims.

10. A lubricating oil additive as claimed in Claim 9 comprising from 1.0 to 30 weight percent of an additive produced by a process as claimed in any one of Claims 1 to 8, based on the total weight of oil composition.

11. A lubricating -motor oil containing from 1.0 to 30 weight percent of an additive as claimed in Claim 9 or Claim 10 based on the total weight of oil.

12. An additive reaction product prepared by reacting a polymer prepared from ethylene and at least one $C_3$ to $C_{10}$ alpha-monoolefin and, optionally, a polyene selected from non-conjugated dienes and trienes, comprising from 25 to 85 mole percent of ethylene, from 15 to 75 mole percent of said $C_3$ to $C_{10}$ alpha-monoolefin, and from 0 to 15 mole percent of said polyene, and having a number average molecular weight ranging from 5,000 to 500,000 with a monomer derived from an unsaturated epoxide and an N-arylphenylenediamine

13. An additive reaction product prepared by reacting a polymer prepared from ethylene and at least one $C_3$ to $C_{10}$ alpha-monoolefin and, optionally, a polyene selected from non-conjugated dienes and trienes, comprising from 25 to 85 mole percent of ethylene, from 15 to 75 mole percent of said $C_3$ to $C_{10}$ alpha-monoolefin, and from 0 to 15 mole percent of said polyene, and having a number average molecular weight ranging from 5,000 to 500,000 with a graft monomer containing an ethylenically unsaturated carbon-carbon double bond and an epoxide group under graft polymerization reaction conditions in the presence of free radical initiator to produce a grafted intermediate and reacting said graft intermediate with an N-arylphenylenediamine

## Patentansprüche

1. Verfahren zur Herstellung eines Öladditivs, welches umfaßt, daß ein Polymer, das aus einem Ethylen und wenigstens einem $C_3$ bis $C_{10}$-Alpha-Monoolefin und fakultativ einem Polyen, ausgewählt aus nicht-konjugierten Dienen und Trienen, hergestellt ist, wobei besagtes Polymer von 25 bis 85 Molprozent Ethylen, von 15 bis 75 Molprozent an besagtem $C_3$-$C_{10}$-Alpha-Monoolefin und von 0 bis 15 Molprozent an besagtem Polyen umfaßt und eine relative Molekülmasse im Zahlenmittel im Bereich von 5.000 bis 500.000 besitzt, zur Reaktion gebracht wird mit (a) einem Monomer, das von einem ungesättigten Epoxid und N-Arylphenylendiamin abgeleitet ist, oder mit (b) einem Pfropfmonomer, das eine ethylenisch ungesättigte Kohlenstoff-Kohlenstoff-Doppelbindung und eine Epoxidgruppe enthält, unter Propfpolymerisationsreaktionsbedingungen in der Gegenwart eines Radikalinitiators, um ein gepfropftes Zwischenprodukt herzustellen, und besagtes Pfropfzwischenprodukt mit N-Arylphenylendiamin zur Reaktion gebracht wird.

2. Verfahren nach Anspruch 1, in dem besagtes Polymer und besagtes Monomer in Reaktion (a) in der Gegenwart eines Radikalinitiators zur Reaktion gebracht werden.

3. Verfahren nach Anspruch 1 oder Anspruch 2, in dem besagtes N-Arylphenylendiamin N-phenyl-p-phenylendiamin ist.

4. Verfahren nach einem der Ansprüche 1 bis 3, in dem besagtes ungesättigtes Epoxid Glycidylmethacrylat oder Allylglycidylether oder eine Mischung derselben ist.

5. Verfahren nach einem der Ansprüche 1 bis 4, in dem besagtes Monomer oder ungesättigtes Epoxid mit besagtem Polymer im Verhältnis von 1,0 bis 40 Teilen Monomer pro 100 Teile von besagtem Polymer zur Reaktion gebracht wird.

6. Verfahren nach einem der vorangehenden Ansprüche, in dem in Reaktion (b) besagter Radikalinitiator Dicumylperoxid ist.

7. Verfahren nach einem der vorangehenden Ansprüche, in dem in Reaktion (b) besagtes N-Arylphenylendiamin mit besagtem Polymer zur Reaktion gebracht wird, das Seiten-Epoxidgruppen im Verhältnis von 0,3 bis 50 Teilen Amin pro 100 Teile von besagtem Polymer enthält.

8. Verfahren nach einem der vorangehenden Ansprüche, wobei das Rückgrat-Polymer ein Copolymer von Ethylen/Propylen/Dien-Terpolymer oder Ethylen/Propylen ist.

9. Schmieröladditiv zur Verwendung als ein Viskositätsindexverbesserer, Antioxidationsmittel und Dispergiermittel in Motorölen, welches einen Hauptanteil eines Einbereichs-Schmieröls und einen Nebenanteil an Produkt umfaßt, das mit einem Verfahren hergestellt ist, wie es in einem der vorangehendenAnsprüche beansprucht ist.

10. Schmieröladditiv nach Anspruch 9, welches von 1,0 bis 30 Gewichtsprozent eines Additivs umfaßt, das hergestellt ist mit einem Verfahren, wie in einem der Ansprüche 1 bis 8 beansprucht, bezogen auf das Gesamtgewicht der Ölzusammensetzung.

11. Schmiermotoröl, das von 1,0 bis 30 Gewichtsprozent eines Additivs enthält, wie beansprucht in Anspruch 9 oder Anspruch 10, bezogen auf das Gesamtgewicht des Öls.

12. Additiv-Reaktionsprodukt, das hergestellt ist, indem ein Polymer, das aus Ethylen und wenigstens einem $C_3$-$C_{10}$-Alpha-Monoolefin und fakultativ einem Polyen, das ausgewählt ist aus nicht-konjugierten Dienen und Trienen, hergestellt ist, umfassend von 25 bis 85 Molprozent Ethylen, von 15 bis 75 Molprozent an besagtem $C_3$-$C_{10}$-Alpha-Monoolefin und von 0 bis 15 Molprozent an besagtem Polyen mit und mit einer relativen Molekülmasse im Zahlenmittel im Bereich von 5.000 bis 500.000, zur Reaktion gebracht wird mit einem Monomer, das abgeleitet ist von einem ungesättigten Epoxid und einem N-Arylphenylendiamin.

13. Additiv-Reaktionsprodukt, das hergestellt ist, indem ein Polymer, das aus Ethylen und wenigstens einem $C_3$-$C_{10}$-Alpha-Monoolefin und fakultativ einem Polyen, daß ausgewählt ist aus nicht-konjugierten Dienen und Trienen, hergestellt ist, umfassend von 25 bis 85 Molprozent Ethylen, von 15 bis 75 Molprozent an besagtem $C_3$-$C_{10}$-Alpha-Monoolefin und von 0 bis 15 Molprozent an besagtem Polyen und mit einer relativen Molekülmasse im Zahlenmittel im Bereich von 5.000 bis 500.000, mit einem Pfropfmonomer, das eine ethylenisch ungesättigte Kohlenstoff-Kohlenstoff-Doppelbindung und eine Epoxidgruppe enthält, unter Pfropfpolymerisationsreaktionsbedingungen in der Gegenwart eines Radikalinitiators, um ein gepfropftes Zwischenprodukt herzustellen, und besagtes Pfropfzwischenprodukt mit einem N-Arylphenylendiamin zur Reaktion gebracht wird.

## Revendications

1. Procédé de préparation d'un additif pour huile, qui comprend la réaction d'un polymère préparé à partir d'éthylène et d'au moins une a-mono-oléfine en $C_3$-$C_{10}$ et, le cas échéant, d'un polyène choisi parmi les diènes et les triènes non conjugués, ledit polymère comprenant de 25 à 85% en moles d'éthylène, de 15 à 75% en moles de ladite $\alpha$-mono-oléfine en $C_3$-$C_{10}$ et de 0 à 15% en moles dudit polyene et ayant une

masse moléculaire moyenne en nombre s'échelonnant de 5 000 à 500 000, avec (a) un monomère dérivé d'un époxyde insaturé et d'une N-arylphénylènediamine ou avec (b) un monomère greffé contenant une double liaison carbone-carbone à insaturation éthylénique et un groupe époxyde, dans des conditions de réaction de polymérisation de greffage, en présence d'un initiateur de radicaux libres, pour produire un intermédiaire greffé, et la réaction dudit intermédiaire greffé avec une N-arylphénylènediamine.

2. Procédé selon la revendication 1, dans lequel ledit polymère et ledit monomère dans la réaction (a) sont mis à réagir en présence d'un initiateur de radicaux libres.

3. Procédé selon la revendication 1 ou 2, dans lequel ladite N-arylphénylènediamine est la N-phényl-p-phénylènediamine.

4. Procédé selon l'une quelconque des revendications 1 à 3, dans lequel ledit époxyde insaturé est le methacrylate de glycidyle ou l'allyl-glycidyl-éther , ou un mélange de ceux-ci.

5. Procédé selon l'une quelconque des revendications 1 à 4, dans lequel ledit monomère ou époxyde insaturé est mis à réagir avec ledit polymère dans le rapport de 1,0 à 40 parties de monomère pour 100 parties dudit polymère.

6. Procédé selon l'une quelconque des revendications précédentes, dans lequel, dans la réaction (b), ledit initiateur de radicaux libres est le peroxyde de dicumyle.

7. Procédé selon l'une quelconque des revendications précédentes, dans lequel, dans la réaction (b), ledit N-arylphénylènediamine est mis à réagir avec ledit polymère contenant des groupes époxyde pendants dans le rapport de 0,3 à 50 parties d'amine pour 100 parties dudit polymère.

8. Procédé selon l'une quelconque des revendications précédentes, dans lequel la chaîne principale du polymère est un copolymère terpolymère éthylènepropylène-diène ou un copolymère éthylène-propylène.

9. Additif pour huile lubrifiante à utiliser comme agent améliorant d'indice de viscosité, comme antioxydant et comme dispersant dans des huiles moteurs, comprenant une proportion majeure d'une huile lubrifiante monograde et une quantité mineure de produit fabriqué par un procédé selon l'une quelconque des revendications précédentes.

10. Additif pour huile lubrifiante selon la revendication 9, comprenant de 1,0 à 30% en poids d'un additif produit par un procédé selon l'une quelconque des revendications 1 à 8, par rapport au poids total de la composition d'huile.

11. Huile moteur lubrifiante contenant de 1,0 à 30% en poids d'un additif selon la revendication 9 ou la revendication 10, par rapport au poids total de l'huile.

12. Produit de réaction additif, préparé par réaction d'un polymère préparé à partir d'éthylène et d'au moins une a-mono-oléfine en $C_3$-$C_{10}$ et, le cas échéant, d'un polyène choisi parmi les diènes et les triènes non conjugués, ledit polymère comprenant de 25 à 85% en moles d'éthylène, de 15 à 75% en moles de ladite $\alpha$-mono-oléfine en $C_3$-$C_{10}$ et de 0 à 15% en moles dudit polyène et ayant une masse moléculaire moyenne en nombre s'échelonnant de 5 000 à 500 000, avec un monomère dérivé d'un époxyde insaturé et d'une N-aryl-phénylènediamine.

13. Produit de réaction additif, préparé par réaction d'un polymère préparé à partir d'éthylène et d'au moins une $\alpha$-mono-oléfine en $C_3$-$C_{10}$ et, le cas échéant, d'un polyène choisi parmi les diènes et les triènes non conjugués, ledit polymère comprenant de 25 à 85% en moles d'éthylène, de 15 à 75% en moles de ladite $\alpha$-mono-oléfine en $C_3$-$C_{10}$ et de 0 à 15% en moles dudit polyène et ayant une masse moléculaire moyenne en nombre s'échelonnant de 5 000 à 500 000, avec un monomère greffé contenant une double liaison carbone-carbone à insaturation éthylénique et un groupe époxyde, dans des conditions de réaction de polymérisation de greffage, en présence d'un initiateur de radicaux libres, pour produire un intermédiaire greffé, et par réaction dudit intermédiaire greffé avec une N-arylphénylènediamine.